# EUROPEAN PATENT SPECIFICATION

(11) **EP 4 560 241 B1**
(45) Date of publication and mention of the grant of the patent: **29.07.2026**
(21) Application number: 24213187.8
(22) Date of filing: 15.11.2024
(51) Int. Cl.: F28D 9/00, F28F 3/00, F28F 11/00

(54) **HEAT EXCHANGER WITH LEAK DETECTION SYSTEM**
WÄRMETAUSCHER MIT LECKSUCHSYSTEM
ÉCHANGEUR DE CHALEUR AVEC SYSTÈME DE DÉTECTION DE FUITE

(30) Priority: 24.11.2023 FR 2312979
(43) Date of publication of application: 28.05.2025
(73) Proprietor: L'AIR LIQUIDE, SOCIETE ANONYME POUR L'ETUDE ET L'EXPLOITATION DES PROCEDES GEORGES CLAUDE, 75007 Paris (FR)
(72) Inventor: GALLIENNE, Nicolas, 78354 Les Loges en Josas (FR); AMANT, Ludovic, 94503 Champigny-sur-Marne (FR); HENDRICKX, Eric, 1130 Bruxelles (BE); GARY, Daniel, 78354 Les Loges en Josas (FR)
(74) Representative: Air Liquide

(56) References cited:
- FR-A- 1 114 146
- US-A- 3 537 513
- US-A1- 2021 354 223
- US-A1- 2022 082 448

## Description

The present invention relates to a brazed-plate heat exchanger with at least one measuring device for detecting a leak in the exchanger.

The present invention is particularly applicable in the field of cryogenic gas separation, in particular cryogenic air separation unit (ASU) for the production of pressurized gaseous oxygen. In particular, the present invention can be applied to a heat exchanger which cools or liquefies a flow of gaseous oxygen coming from an ASU by heat exchange with a flow of liquid nitrogen, or to a heat exchanger which heats or vaporizes a flow of liquid oxygen by heat exchange with a flow of gaseous nitrogen. Alternatively, the present invention can be applied to a heat exchanger which cools or liquefies an oxygen gas flow from an ASU by heat exchange with a warming or vaporizing liquid argon flow.

The present invention can also be applied to a heat exchanger which heats or vaporizes at least one liquid-gas mixture flow, in particular a multi-component mixture flow, e.g. a hydrocarbon mixture, by heat exchange with at least one other fluid, e.g. natural gas or nitrogen gas. An exchanger according to the invention can also be used to vaporize or heat liquefied natural gas against cooling or liquefying nitrogen gas.

More generally, the invention can be applied to a heat exchanger in which at least one fluid circulates at a pressure of at least 20 bar.

The exchanger according to the invention can also be a reactor exchanger or catalytic exchanger configured to carry out chemical reactions with the fluid(s) circulating in the exchanger.

A commonly used technology for heat exchangers is that of brazed plate heat exchangers, which provide very compact units with a large heat exchange surface area and low pressure drops. These exchangers are made up of a set of parallel plates, between which may be inserted interposed elements, such as corrugated or wave structures, forming finned heat exchange structures. The stacked plates form between them a stack of flat passages for different fluids to be brought into heat exchange relationship.

During exchanger manufacture, the plates, finned spacers and other exchanger components are pressed together and then brazed together in a vacuum furnace at temperatures ranging from 550 to 900°C.

Due to their compact, monolithic design, it is difficult to measure physical quantities, particularly temperatures, within these plate heat exchangers. As a result, in the majority of processes in which they are installed, the operator only has access to the total thermal power exchanged between fluids, thanks to an energy balance carried out between the inlet and outlet of each fluid. This greatly complicates the characterization and monitoring of the operation of these exchangers, and makes it impossible, for example, to measure in isolation physical quantities relating to the fluid circulating in each of the passages.

In use, the absence of local data limits the possibilities of process control. In particular, certain physical phenomena which may take place within the exchanger, such as phase changes or chemical reactions, result in a local variation in temperature, which also depends on the position considered in the exchanger.

Local temperature measurements can be used in situ to detect poor operating conditions on exchangers, such as poor fluid distribution or reduced performance in certain areas of the exchanger due, for example, to clogging or local distillation. Local temperature or heat flow measurements are also useful for monitoring the performance of plate-fin heat exchangers over the course of their service life.

In situ" temperature measurement methods do exist, but they are relatively intrusive, as they modify fluid flows within the heat exchanger passages. And because they are not foreseen when the exchanger is built, their implementation is relatively complex, costly and not very robust.

Furthermore, in the case of brazed-plate exchangers, the geometry and microstructure of the brazing material connecting the exchanger components together make the brazed zones prone to fatigue damage, the appearance and propagation of cracks, and hence the risk of fluid leakage. This risk increases in the case of exchangers operating in cyclic mode, i.e. undergoing cyclic variations in the pressures of the fluids circulating in the exchanger, and/or in the case of exchangers where the fluids circulate at high pressures, typically over 30 bar, or even over 50 bar.

In some processes, leaks can generate high local concentrations of certain fluids, representing a risk inherent to the nature of the fluid or an alteration in the quality of the fluid leaving the exchanger. Leaks can also degrade the operating conditions and performance of exchangers and the associated process.

Document FR-A-2929369 describes a plate heat exchanger with doubled passage sealing bars, so that the space between them forms a dead zone open to the atmosphere via a vent through which any fluid leak can escape. However, this solution does not make it possible to detect the occurrence of a leak, in particular in order to be able to adjust or stop the operation of the exchanger if necessary, nor to locate the leak, in particular in order to facilitate inspection of the exchanger at a later date.

FR 1 114 146 A discloses, according to the preamble of claim 1, a brazed plate type heat exchanger comprising a stack of plates arranged parallel to one another so as to define passages between the plates, the plates having edges extending in a longitudinal direction and sealing bars arranged between adjacent plates to delimit internal volumes for the flow of fluids, the sealing bars defining a longitudinal recess extending along the plates and used for leak monitoring.

US 2022 082448 A1 relates to a plate heat exchanger in which a temperature probe is inserted into the internal heat exchange structure in order to measure the temperature of the fluid flowing through the exchanger and to monitor its thermal behaviour during operation.

An alternative to limit these risks is the use of coil-type heat exchangers. However, these are still much less efficient than plate heat exchangers, whose large exchange surface area and low pressure drops offer greater thermal efficiency.

One of the aims of the present invention is to solve some or all of the above-mentioned problems, by providing a plate heat exchanger in which fluid leaks can be accurately and quickly detected and located, without disturbing the operation of the exchanger or the flow of fluids, and without increasing its size.

To this end, the invention has as its object a heat exchanger of the brazed plate type comprising a stack of plates arranged parallel to one another so as to define between said plates a plurality of passages, the plates each comprising at least one first edge extending parallel to a first direction, at least one passage defined between two consecutive plates comprising at least one sealing bar arranged so as at least partially to delimit one or more internal volumes for the flow of one or more fluids within said passage, the sealing bar comprising at least one longitudinal recess, the sealing bar and the longitudinal recess extending, in the direction of their length, parallel to the first direction (z), characterized in that at least one measuring member is arranged in the longitudinal recess and configured to measure at least one physical quantity, in particular at least one temperature, in said longitudinal recess.

Depending on the case, the exchanger according to the invention may comprise one or more of the features below.

Said at least one sealing bar is arranged at the first edge so as to at least partially separate an internal volume from the outside of the stack or in that said at least one sealing bar is arranged at a predetermined distance from the first edge so as to at least partially separate an internal volume from another internal volume within the passage.

Said at least one measuring member is elongate in shape and extends, in the direction of its length, parallel to the first direction in the longitudinal recess, the measuring member preferably being configured to measure several values of said physical quantity along the first direction.

Said at least one measuring device comprises at least one optical waveguide, in particular at least one optical fiber.

The sealing bar comprises a first bar portion and a second physically separate bar each extending parallel to the first direction and being spaced apart in a second direction orthogonal to the first direction and parallel to the plates such that the longitudinal recess is formed by the space between the first bar portion and the second bar portion or in that the longitudinal recess is formed by a groove in a monolithic sealing bar comprising two side faces facing each of the adjacent plates, the groove opening into one or other of the bar's side faces.

The exchanger comprises at least two sealing bars arranged in opposition between two adjacent plates, each bar extending, lengthwise, parallel to the first direction and comprising at least one longitudinal recess extending, lengthwise, parallel to the first direction and provided with at least one measuring member.

The longitudinal recess and the measuring member extend over at least 50%, preferably at least 75%, even more preferably the entire length of the sealing bar.

The sealing bar comprises at least one longitudinal face parallel to the first direction and at least one transverse face orthogonal to the first direction, the longitudinal recess opening out to the outside of the stack through at least one opening located on the transverse face of the sealing bar, preferably the sealing bar comprises two opposite transverse faces and the longitudinal recess opens out to the outside of the stack through two openings located on each of the opposite transverse faces.

The exchanger comprises at least one set of sealing bars extending lengthwise parallel to the first direction and arranged one above the other in a stacking direction orthogonal to the plates, each sealing bar of said set comprising at least one longitudinal recess extending lengthwise parallel to the first direction and provided with at least one measuring member.

The sealing bars of said assembly each comprise at least one longitudinal face parallel to the first direction, at least one transverse face orthogonal to the first direction and at least one longitudinal recess extending, in the longitudinal direction, parallel to the first direction and provided with at least one measuring member, the longitudinal recesses of each sealing bar opening to the outside of the stack through respective openings located at the transverse faces of each bar, at least one measuring member extending to the outside of a longitudinal recess through one of the openings and then re-entering the inside of an adjacent longitudinal recess through another of said openings.

The measuring member comprises at least two inner portions each arranged in a longitudinal recess of a sealing bar and integrally connected by a curvilinear outer portion arranged outside the stack, preferably the outer portion has a radius of curvature of at least 10 cm, preferably at least 20 cm.

The plates have two opposite second edges arranged parallel to a second direction orthogonal to the first direction, the measuring member comprising a plurality of inner portions connected by outer portions located alternately on the side of one or other of the opposite second edges.

The stack has a total height measured in the stacking direction, the sealing bars of said assembly being separated from one another by intermediate heights measured in the stacking direction, the ratio between the intermediate heights and the total height being between 5 and 50%.

Said at least one longitudinal recess and said at least one measuring member have, along at least one direction orthogonal to the first direction if the sealing bar is arranged parallel to the first direction or parallel to the first direction if the sealing bar is arranged orthogonal to said second direction, an inner dimension and an outer dimension respectively, the ratio between the outer dimension of the measuring member and the inner dimension of the longitudinal recess being at most 95%, preferably between 70 and 90%.

Furthermore, the invention relates to a heat exchange installation comprising an exchanger according to one of the preceding claims and comprising at least one distribution pipe configured to distribute one or more fluids in one or more internal volumes of at least one passage, at least one fluid control device configured to authorize, modify and/or stop the distribution of at least one fluid through the distribution pipe, the measuring device being configured to generate at least one leak signal in response to a variation in said physical quantity and the control device being configured to modify or stop the distribution of said fluid through the distribution pipe in response to said leak signal.

According to another aspect, the invention concerns the use of an exchanger according to the invention or an installation according to the invention to bring at least one fluid into heat exchange relationship with at least one other fluid, the fluid and/or the other fluid comprising one of : neon, krypton, xenon, nitrogen, argon, oxygen, hydrogen, helium, carbon monoxide, carbon dioxide, methane, in particular for liquefying or cooling gaseous oxygen by heat exchange with liquid nitrogen or liquid argon.

The invention also relates to a cryogenic air separation unit comprising at least one exchanger according to the invention or an installation according to the invention, in which unit said exchanger operates a liquefaction or cooling of a flow of gaseous oxygen coming from the cryogenic air separation unit with liquid nitrogen or liquid argon which heats up or vaporizes.

The invention will now be better understood thanks to the following description, given as a non-limiting example and made with reference to the attached figures, among which :
[Fig. 1] is a three-dimensional view of an exchanger according to one embodiment of the invention,
[Fig. 2] is a longitudinal sectional view of a passage of an exchanger according to one embodiment of the invention,
[Fig. 3] is another longitudinal cross-sectional view of a passage of an exchanger according to one embodiment of the invention,
[Fig. 4] is another longitudinal cross-sectional view of passages of an exchanger according to one embodiment of the invention, in a sectional plane orthogonal to the sectional plane of Fig. 2 and Fig. 3,
[Fig. 5] is a cross-sectional view of a measuring device according to one embodiment of the invention,
[Fig. 6] is a longitudinal section view of a measuring device according to one embodiment of the invention.

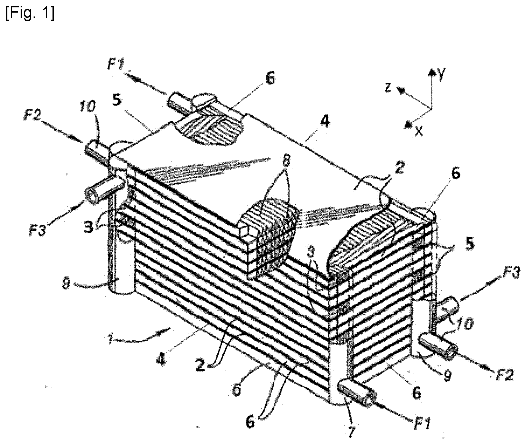

Figure 1 shows an example of a brazed-fin plate heat exchanger comprising a stack 1 of plates 2 which extend in two dimensions, length and width, in a first z-direction and a second x-direction respectively. Preferably, the stack 1 is parallelepipedic in shape. The plates 2 are arranged one on top of the other, parallel to each other and spaced apart. They thus form between them several sets of passages 3, some passages being provided for the flow of a first fluid F1, and other passages being provided for the flow of at least one other fluid F2, F3 to be brought into indirect heat exchange relationship with F1 via the plates 2. Preferably, the second direction x is perpendicular to the first direction z and parallel to the plates 2. The fluids preferably flow along the length of the exchanger, the length being greater than the width of the exchanger. In the case illustrated, the first z direction corresponds to the longitudinal extension of the exchanger, and the fluids flow generally parallel to the first z direction. Of course, other flow directions are also possible within the scope of the invention, in particular fluid flow directions generally parallel to the first x direction.

Preferably, each passage has a flat, parallelepiped shape. The distance between two successive plates 2, corresponding to the height of the passage, measured along the stacking direction y of the plates 2, is smaller than the length and width of each successive plate. The stacking direction y is orthogonal to the plates 2.

The plates 2 each comprise at least one first edge 4 extending parallel to the first direction z. Preferably, the plates 2 each comprise a pair of first edges 4 arranged parallel to the first direction z and opposite each other. According to the embodiment illustrated in Figure 1, the plates 2 are further delimited by a pair of second edges 5 arranged parallel to the second direction x and opposite each other.

The passages 3 are delimited by sealing bars 6 arranged between the plates 2, at the periphery of the passages 3. These bars 6 ensure the spacing between the plates 2 and delimit an internal volume suitable for the flow of one or more fluids within each passage 3 and ensure the sealing of the passages 3 with respect to the outside of the stack. Preferably, at least one sealing bar 6 extends along the first direction z, and even more preferably a passage 3 is delimited between a pair of bars 6 parallel to the first direction z. The passages 3 can be further delimited by at least one sealing bar 6 extending along the second direction x, preferably a passage 3 is delimited between a pair of bars 6 parallel to the second direction x.

Depending on the location of the exchanger's fluid inlet and outlet zones, the sealing bars 6 may not completely seal the passages, but leave openings free for the corresponding fluids to enter or exit. The exchanger 1 comprises semi-tubular manifolds 7, 9 with inlets and outlets 10 for introducing fluids into the exchanger and discharging fluids from the exchanger. Distribution zones arranged downstream of the inlet manifolds and upstream of the outlet manifolds serve to channel fluids uniformly to or from the full width of the passages.

Alternatively or additionally, at least some of the passages 3 may comprise at least one sealing bar 6 arranged to delimit at least in part several internal volumes within the passage 3. Different fluids can flow through these internal volumes, the sealing bar being configured to prevent the circulation of these fluids from one internal volume to another.

Preferably, at least some of the passages 3 comprise finned spacer elements 8 which advantageously extend along the width and length of the exchanger passages, parallel to the plates 2. In the example shown, the spacer elements 8 comprise heat exchange waves in the form of corrugated sheets. In this case, the wave legs connecting the wave's successive vertices and bases are referred to as "fins". Spacer elements 8 can also take on other particular shapes defined according to the desired fluid flow characteristics. More generally, the term "fins" covers blades or other secondary heat exchange surfaces, which extend from the primary heat exchange surfaces, i.e. the exchanger plates, into the exchanger passages.

Preferably, waves are used as the spacer element 8. In particular, waves are used whose fins extend parallel to the first z direction, with a general direction of corrugation that is perpendicular to the first z direction and parallel to the plates 2.

Preferably, when manufacturing the exchanger 1, a set of plates 2 is supplied and stacked parallel to each other and to the first z-direction. Plates 2 are spaced apart by sealing bars 6. Once the other components of the exchanger have been assembled, in particular the exchange waves, distribution waves, etc., the stack is brazed to secure the exchanger components together. A brazing filler metal is arranged between the exchanger elements. Preferably, the plates and some or all of the other exchanger components are made of aluminum or an aluminum alloy.

Within the stack, adjacent plates 2 are separated by sealing bars 6 arranged between each pair of adjacent plates. Together with the adjacent plates 2, these bars 6 delimit at least one internal volume in which at least one fluid can flow. Sealing bars 6 are arranged to prevent fluid from escaping from an internal volume of passageway 3 to the outside of the stack and/or to prevent fluid from flowing between several internal volumes of the same passageway 3, as the case may be. Sealed junction zones are formed between the sealing bars and adjacent plates, in particular by brazing the bars to the plates. However, as a result of the thermal and mechanical stresses to which the exchanger is subjected over time, the tightness of the passages may degrade and the first fluid may infiltrate between the sealing bars and the adjacent plates.

According to the invention, at least one sealing bar 6 extending along the first direction z is provided with at least one longitudinal recess 12 arranged so as to be able to collect said first fluid in the event of leakage from a passage 3 delimited by said sealing bar 6. The sealing bar 6 and the longitudinal recess 12 extend lengthwise parallel to the first z direction. A measuring device 14 is arranged in the longitudinal recess 12 and configured to detect a variation in at least one physical quantity, in particular a temperature variation, in the longitudinal recess 12.

The invention thus makes it possible to detect any leakage of fluid at the sealing bar 6 from the adjacent internal volume by detecting a change in a physical quantity caused in the longitudinal recess 12 by the introduction of fluid into the longitudinal recess 12. Depending on the positioning of the sealing bar, the invention can detect leaks from passage 3 to the outside of the stack, or leaks between internal volumes of a passage separated by bar 6. If a leak is detected, operation of the exchanger can be stopped to ensure the safety of operators and reduce the risk of pollution of the fluids used. As a physical quantity representative of a leak in circuit 12, the temperature in longitudinal recess 12 can be measured. Advantageously, the measuring device is configured to detect a temperature variation in the longitudinal recess 12 or to measure the temporal evolution of the temperature in the longitudinal recess 12. By measuring the temperature, it is possible to detect abrupt variations in temperature, which are characteristic of a leak.

The arrangement of the measuring element 14 in a sealing bar 6 does not increase the overall dimensions of the heat exchanger. Temperature measurements can be performed locally by positioning the measuring element as required. What's more, the measuring element can be inserted after the stack formation stage, reducing the risk of probe damage and enabling a wider variety of technologies to be used, without being limited to high-temperature-resistant probes.

The invention also makes it possible to measure the characteristics of the fluid flowing through the passage 3 delimited by the sealing bar 6 which comprises the longitudinal recess, such as temperature, without disturbing the fluid flow. Such measurements can be used to detect any malfunctions in the exchanger or to monitor fluid characteristics dynamically, and in particular to assess thermal shocks to the exchanger.

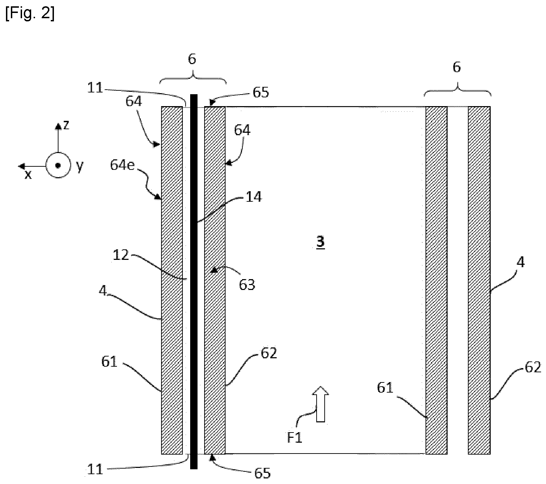

Figure 2 shows an example in which a longitudinal recess 12 is formed in a bar 6 extending parallel to the first direction z, which defines an overall direction of fluid flow F1. In addition to leak detection, this configuration enables the temperature of the fluid, and therefore its evolution, to be measured locally at different positions along the length of the exchanger, as it exchanges heat with another fluid flowing in an adjacent passage. This provides information on the physical phenomena that can take place within the exchanger, including phase changes and chemical reactions, and on their location within the exchanger.

In the context of the invention, one or more sealing bars 6 may be provided with one or more longitudinal recesses 12, each fitted with measuring elements 14. It is also conceivable that one or more longitudinal recesses 12 may be provided in other sealing bars, in particular sealing bars 6 parallel to the second direction x. In this way, at least one sealing bar 6 and the associated longitudinal recess 12 can extend parallel to the second direction x.

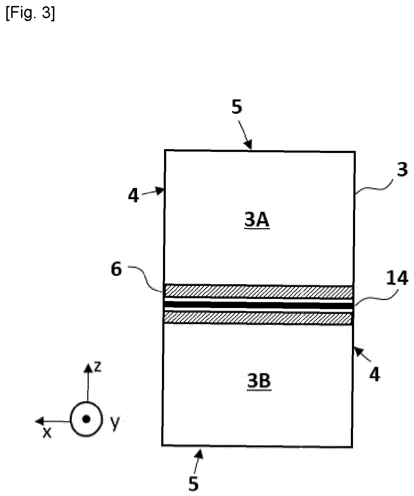

With reference to Figure 3, the plates 2 may each further comprise at least one second edge 5 extending perpendicularly to the first direction z, at least one sealing bar 6 being arranged lengthwise parallel to the second edge 5 and comprising at least one longitudinal recess 12 extending lengthwise parallel to the second edge 5 and provided with at least one measuring member 14.

In the context of the invention, at least one sealing bar 6 can be arranged at a first edge 4 or a second edge 5 to form a peripheral bar at least partially separating an internal volume from the outside of the stack. The sealing bar thus at least partially delimits the periphery of a passageway 3. At least one sealing bar 6 can also be arranged at a predetermined distance from a first edge 4 or a second edge 5 to form a separating bar separating one internal volume from another internal volume within the passage 3. The sealing bar thus at least partially delimits an internal volume 3A from another volume 3B within the stack. Combinations of these embodiments are conceivable, in particular at least one passageway 3 may comprise at least one peripheral bar and at least one separating bar.

According to one embodiment, at least two sealing bars 6 are arranged in opposition between two adjacent plates 2, parallel to the first direction z or the second direction x, so as to delimit the same passage 3. Each of the two opposing sealing bars 6 comprises at least one measuring element 14 arranged in a fluid circuit 12.

Installing measuring devices 14 on the bars located on either side of passageway 3 enables even more effective leak detection. This also makes it possible to check that the fluid is evenly distributed across the width of the passage, and in particular to verify that the physical quantity measured is identical on each side. In particular, by measuring temperatures on both sides of the passage, we can effectively detect any maldistribution phenomena. Heat exchange in the passage, on which fluid and bar temperatures depend, is linked to the fluid flow rate in the vicinity of the probes. Temperature differences between each side therefore reveal flow differences. In addition, the probes can be used to dynamically monitor transient temperature regimes over time, and to assess thermal shocks to the exchanger.

Preferably, the longitudinal recess 12 and the measuring member 14 extend over at least 50%, preferably at least 75%, even more preferably the entire length of the sealing bar 6. It should be noted that the length of the bar 6 is measured along its longitudinal extension, in particular along the first z direction in the case where the bar extends, in the direction of its length, along the first z direction. In this way, it is possible to arrange one or more measuring devices along a significant proportion of the length or width of passages 3 and thus improve the efficiency and accuracy of leak detection. The arrangement of several recesses makes it possible to measure changes in physical quantities at different positions along the length and/or width of the exchanger, to determine where leaks are taking place.

In one embodiment, the exchanger comprises at least one set of sealing bars 6 arranged parallel to the first direction z and one above the other along the stacking direction y. At least one measuring element 14 is arranged in the longitudinal recess 12 of each sealing bar 6 of the assembly. This makes it possible to detect any fluid leaks at different positions in the stack height and identify the passage(s) concerned. Each recess 12 in a bar 6 can be used to detect a leak from the passage 3 facing the bar 6.

In particular, the stack has a total height H measured in the stacking direction y, and the sealing bars 6 provided with recesses 12 and members 14 are separated from one another by intermediate heights h measured in the stacking direction y, the ratio between the intermediate heights h and the total height H being between 5 and 50%.

In an embodiment in which the measuring element comprises an optical fiber, the intermediate height h is greater than twice the minimum radius of curvature of the fiber or of the protective sheath in which said fiber is located.

In particular, the intermediate height h is at least 5 cm, preferably at least 10 cm, even more preferably at least 20 cm.

In one embodiment, the ratio between the total number of passages 3 in the stack and the number of passages 3 fitted with at least one sealing bar according to the invention is between 1 and 10, preferably greater than or equal to 5.

It should be noted that the bars 6 can be arranged equidistantly in the height of the stack, but not necessarily.

Preferably, longitudinal recess 12 opens to the outside of stack 1 through at least one opening 11. This allows leakage of the first fluid to escape to the outside of the stack. Opening 11 may be connected to the atmosphere via a vent or to a leak recovery circuit. Aperture 11 is also used for inserting and/or removing measuring element 14. In particular, the longitudinal recess is continuous and opens onto two apertures 11 located on either side of the length of the bar 6, allowing a more flexible arrangement of the measuring element. Preferably, the measuring element 14 protrudes from the stack 1 through at least one opening 11.

In particular, the sealing bar 6 comprises at least one longitudinal face 64 parallel to the first z direction and at least one transverse face 65 orthogonal to the first z direction.

In one embodiment, the at least one sealing bar 6 is parallelepipedic in shape. The cross-section of said bar may be square or rectangular. The sealing bar 6 comprises two opposing longitudinal faces 64 which are parallel to the first direction z and to the stacking direction y. Depending on the positioning of the bar in the exchanger, one longitudinal face 64 is oriented towards an internal fluid circulation volume and another longitudinal face 64 is oriented towards the outside of the stack, or each longitudinal face 64 is oriented towards a respective internal fluid circulation volume. The sealing bar 6 comprises two opposing side faces 63 which are parallel to the first direction z and orthogonal to the stacking direction y. The opposite side faces 63 face the adjacent plates 2.

As shown in Figure 2, the sealing bar 6 may comprise a first bar portion 61 and a second bar portion 62 physically distinct from each other. The first bar part 61 and the second bar part 62 each extend parallel to the longitudinal direction z and to the plates 2. The longitudinal recess 12 then results from the spacing formed along the second direction x between the first bar part 61 and the second bar part 62. In the event of at least partial loss of the seal provided by one or other of the first and second bar parts, fluid can flow into and collect in the recess 12.

Alternatively, longitudinal recess 12 is formed by a groove in a monolithic sealing bar 6. In particular, the groove can have any suitable cross-sectional shape, including square, rectangular or semicircular. The groove preferably opens onto one or other of the side faces 63 of the bar 6 facing one or other of the adjacent plates 2. The groove has a second width, measured along the second direction x, which is less than the total width of the sealing bar. In the event of at least partial loss of the seal provided by the sealing bar, fluid can leak out and collect in recess 12.

Preferably, the longitudinal recess 12 opens outwards through at least one opening 11 located on the transverse face 65. As shown in the example of Figure 2, the sealing bar 6 preferably comprises two opposing transverse faces 65 and the longitudinal recess 12 opens outwards from the stack 1 through two openings 11 located on each of the opposing transverse faces.

According to a particular embodiment, the sealing bar 6 comprises an external longitudinal face 64e parallel to the first direction z and aligned with the first edge 4 of an adjacent plate 2. In this configuration, the outer longitudinal face 64e forms part of a peripheral surface of the stack.

In particular, the sealing bar 6 may comprise at least one transverse face 65 parallel to the second direction x and aligned with a second edge 5 of an adjacent plate 2. In this configuration, transverse face 65 forms part of a peripheral surface of the stack.

Preferably, the stack 1 has at least one first face parallel to the first direction z, on which the first edges 4 of the plates 2 and the external longitudinal faces 64e of the bars 6 are located. In addition, the stack 1 can have at least one second face, parallel to the second direction x, on which the second edges 5 of the plates 2 and the transverse faces 65 of the bars 6 are located.

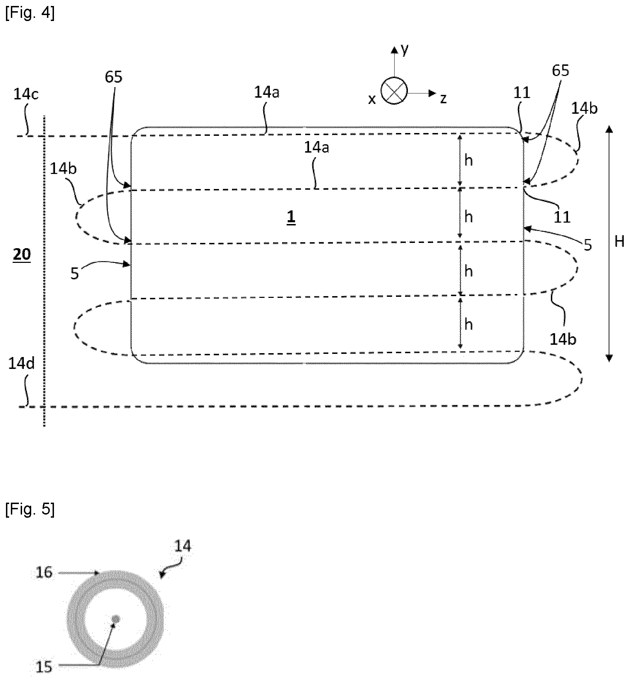

Figure 4 illustrates an embodiment in which the exchanger comprises at least a first set of sealing bars 6 parallel to the first direction z and arranged one above the other, each with at least one longitudinal recess 12 provided with at least one measuring member 14. In particular, the sealing bars 6 of the assembly each comprise at least one transverse face 65 provided with an opening 11 through which the longitudinal recesses 12 open to the outside of the stack 1.

Alternatively, the exchanger may comprise at least one pair of first bar assemblies arranged in opposition on either side of the passages 3.

Preferably, at least one measuring element 14 extends outwards from a longitudinal recess 12 through one of the apertures 11 and then re-enters an adjacent longitudinal recess 12 through another of said apertures 11. In this way, the same measuring device can be fitted to different recesses 12, and thus detect leaks from different passages 3.

In particular, measuring member 14 comprises at least two inner portions 14a each arranged in a longitudinal recess 12 of a sealing bar 6 and integrally connected by a curvilinear outer portion 14b arranged outside the stack, preferably outer portion 14b has a radius greater than 5 cm, preferably greater than 10 cm.

In particular, the plates 2 have two opposite second edges 5 arranged parallel to the second direction x, the measuring member 14 comprising a plurality of inner portions 14a connected by outer portions 14b located alternately on the side of one or other of the second edges 5. The same measuring element can thus snake its way through the stack. This arrangement makes it possible to have just one measuring element, and therefore just one signal transmission and acquisition system. This simplifies operation and facilitates maintenance of the exchanger. The associated investment costs are reduced.

Alternatively or additionally, the exchanger may comprise at least a second set of sealing bars parallel to the second direction x and arranged one above the other in the stacking direction y, each with at least one longitudinal recess provided with at least one measuring member. In particular, the sealing bars of the second set each comprise at least one opening through which the longitudinal recesses open to the outside of the stack. The said second set of bars may have all or some of the features described above for the first set, except that the longitudinal faces of the bars 6 are parallel to the second direction x and that the openings 11 open out on the side of the first edges 4 and are arranged on transverse faces of the bars 6 arranged parallel to the first direction z.

Preferably, with reference to the example shown in Figure 5, measuring member 14 comprises an inner part 15 sensitive to a variation in said at least one physical quantity in longitudinal recess 12 and a protective sheath 16 arranged around inner part 15.

Preferably, the measuring element is elongated so that it can be easily inserted into the recess and does not increase the size of the heat exchanger.

Preferably, a single measuring member is arranged in the recesses of a bar assembly as described above, or even a single measuring member is arranged in the recesses of several bar assemblies, whether they are arranged parallel to the first z-direction or the second x-direction.

Preferably, said at least one measuring member 14 comprises a plurality of sensitive zones arranged along the measuring member 14 and at which the physical quantity is measured. The said sensitive zones may be arranged equidistant from one another, but not necessarily. In particular, the sensitive zones can be separated from each other by distances of between 5 and 100 mm, preferably distances of between 10 and 50 mm.

According to an advantageous embodiment, said at least one measuring member 14 comprises at least one optical waveguide, in particular at least one optical fiber. It should be noted that the term "optical fiber" can be taken to mean either a single optical fiber, or a network of several optical fibers in series or in parallel.

An optical waveguide is defined as a structure for confining and guiding light. The waveguide is made up of two or more layers of transparent dielectric materials, such as silica glass or plastic, with different refractive indices, ensuring light confinement near the center. An optical fiber is a circularly symmetrical optical waveguide. An optical fiber generally consists of a dielectric medium called the core, covered by a material called the cladding, with a refractive index lower than that of the core. The whole assembly is surrounded by an envelope, generally made of plastic, which has the dual role of protecting the fiber mechanically and trapping the light propagating through the optical cladding, which is generally undesirable. Fiber optic measuring devices are both sensors and light signal transmission channels. They are sensitive to variations in physical quantities in the surrounding environment, such as temperature, deformation...

Fiber optics have the advantages of requiring only limited instrumentation and little or no power supply, and are extremely compact, making them less intrusive, easier to implement and compatible with regulations concerning explosive atmospheres (ATEX regulations).

In the case of an optical fiber 14, the protective sheath 16 may be the fiber jacket, or a tubular sleeve arranged around the jacket, preferably made of metallic material.

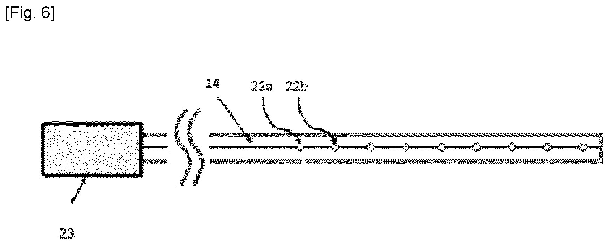

Preferably, the fiber optic measuring element is connected to a system for measuring the profile of the physical quantity, in particular temperature, measured along said optical fiber. In particular, the principle of the measuring system can be based on Raman, Rayleigh or Brillouin spectroscopy of at least one light pulse and the influence of the physical quantity on light absorption. After digital processing, the intensity variations and acquisition times of the reflected signals enable any changes in the physical quantity to be recorded at different points along the fiber, and translated into a detailed temperature profile along the fiber. This temperature profile can then be used to identify, in real time, areas of the sealing bar where variations occur, indicating the presence of leaks. Figure 6 shows an example in which a measuring device 14 comprising at least one optical fiber is connected to a device for emitting at least one light pulse 23 configured to determine the physical quantity at different points or sensitive zones 22a, 22b... along the optical fiber.

The temperature profile measured along the optical fiber is generally a discontinuous profile, i.e. made up of a series of temperatures, each of which corresponds to a finite element of said optical fiber.

Advantageously, two categories of optical waveguide-type measuring devices 14 can be used. The first category comprises distributed, i.e. continuously sensitive, sensors based on the Raman effect, the Brillouin effect or the Rayleigh effect, and distributed, i.e. locally sensitive, sensors with Bragg gratings photo-inscribed within the fiber core. The second category is that of extrinsic measurement devices, which use several processes based on the connection of microtransducers to the optical fiber. Whether it's a semiconductor, a Fabry-Perot interferometric cavity or a phosphorescent compound, the function of each of these is to cause one of the parameters of the guided optical wave - intensity, spectrum, phase, etc. - to evolve as a function of temperature or another physical quantity, with measurement of the evolution of this optical parameter enabling the induced thermal variations to be traced. In the case of distributed sensors, the principle of fiber optic measurement is based on the interaction between light and matter. When the fiber material is crossed by a light pulse, it emits a backscattered spectrum made up of three types of components: Raman backscattering, Rayleigh backscattering and Brillouin backscattering. At least one of these components can be used.

In particular, it is possible to use Rayleigh backscattering, which is the result of the interaction between impurities in the fiber and an electromagnetic field. The local variation in refractive index linked to the variation in temperature and/or deformation varies the intensity of the backscattered wave, making it possible to trace the desired information.

It is also possible to use the Raman effect to determine the fiber temperature at different points (regular spatial discretization of the fiber). The Raman effect is a nonlinear effect based on the principle of energy exchange between the optical wave and the vibration of the material. This has the effect of shifting the lines representing the light spectrum. Shifted, lower and higher frequencies are observed. Since temperature only affects the higher shifted frequencies, it is possible to use this spectrum as a temperature sensor.

Preferably, these phenomena are implemented by means of an OTDR-type device (acronym for Optical Time Domain Reflectometry in English), which consists in sending a long light pulse, it being possible to trace the position of the measurement point or sensitive zone knowing the propagation speed of the light wave in the material. Spatial resolution depends on the length of the pulse sent.

Alternatively, a measuring element 14 comprising at least one fiber Bragg grating can be used. A fiber Bragg grating is an optical fiber whose core has a refractive index that alternates between a relatively high and a relatively low index along the length of the fiber. This variation enables the fiber to reflect certain wavelengths and let others through. The wavelength reflected depends on the distance between a section with a high refractive index and sections with a low refractive index. The distance between two high-refractive-index sections is called the Bragg grating period. Each measuring point or sensitive zone reflects a wavelength thanks to a pattern "printed on the fiber". The wavelength reflected varies with temperature and strain.

Note that it is also possible to use a resistance-based temperature measuring element 14, for example a resistance thermometer, particularly a platinum resistance thermometer of the PT100 type, or a thermocouple or thermistor temperature measuring element 14. In particular, measuring element 14 can comprise a protective sheath 16 in which several resistance, thermocouple or thermistor measuring elements are arranged discretely along the sheath, thus enabling measurements to be taken at different positions along the measuring element, and therefore at different positions in the exchanger.

The transverse dimension(s) of the longitudinal recess 12 can be adapted to those of the bar 6 and/or those of the measuring element 14.

In particular, said at least one longitudinal recess 12 and said at least one measuring member 14 have, along at least one direction parallel to the second direction x if the sealing bar 6 is arranged parallel to a longitudinal edge 4 or measured in a direction parallel to the first direction z if the sealing bar 6 is arranged parallel to a lateral edge 5, an inner dimension and an outer dimension respectively, the ratio between the outer dimension of the measuring member 14 and the inner dimension of the longitudinal recess 12 being at most 95%, preferably between 70 and 90%. These values are defined in such a way that the measuring element can slide in the recess and deviate slightly from its overall direction of extension in the recess, in order to avoid the measuring element coming under tension due to differential expansions between the measuring element and the material surrounding this recess. This reduces the risk of measuring element breakage. The external dimension of measuring element 14 includes the external dimension of the protective sheath, where applicable.

If the longitudinal recess 12 is formed by the space between two separate bar sections 61, 62, the depth of the longitudinal recess 12, measured in the stacking direction y, corresponds to the height of the passage 3 in which the bar 6 is located. Preferably, the internal dimension of the longitudinal recess 12 is equal to the height of the passage, the ratio between the external dimension of the measuring member 14 and the height of the passage being at most 95%, preferably between 70 and 90%.

If the longitudinal recess 12 is formed by a groove in a monolithic bar 6, the depth of the longitudinal recess 12, measured in the stacking direction y, is less than the height of the passage 3 in which the bar is located. Preferably, the internal dimension of the longitudinal recess 12 is equal to the recess depth, the ratio between the external dimension of the measuring member 14 and the recess depth being at most 95%, preferably between 70 and 90%.

When measuring leakage, the outer surface of measuring element 14 is preferably not in contact with the surface of the inner walls of recess 12. By contact, we mean direct or indirect thermal contact, in particular thermal contact by means of a material enabling heat transfer between the outer surface of measuring element 14 and the walls of recess 12. This absence of contact improves system response by avoiding thermal inertia of the material.

Alternatively, the outer surface of measuring element 14 is in thermal contact with at least part of the inner wall surface of recess 12. Such a configuration can be used in particular to measure the characteristics of fluids flowing through the heat exchanger in order to monitor or characterize its operation.

If required, the measuring element can be fixed in the recess, on the bar 6 or on part of the stack 1, for example using cement or adhesive with good thermal conductivity.

Preferably, with reference to a partial schematic in Figure 5, the exchanger according to the invention comprises a cold box comprising walls 20 forming a closed enclosure around the stack 1. The measuring member 14 extending between a first end 14c and a second end 14d located outside the cold box, and circulating inside the cold box through at least one orifice provided in at least one wall of the cold box. This makes it possible to place the instrumentation required to detect and process measurement signals, and where applicable the control systems for the exchanger fluid supply, outside the cold box in order to limit the constraints on this type of equipment, which can therefore be positioned in the control area of the unit.

Of course, the invention is not limited to the particular examples described and illustrated in the present application. Other variants or embodiments within the scope of the skilled person may also be envisaged without departing from the scope of the invention defined by the following claims.

## Claims

1. A brazed plate type heat exchanger comprising a stack (1) of plates (2) arranged parallel to one another so as to define between said plates (2) a plurality of passages (3), the plates (2) each comprising at least a first edge (4) extending parallel to a first direction (z), at least one passage (3) defined between two consecutive plates (2) comprising at least one sealing bar (6) arranged to at least partially delimit one or more internal volumes for the flow of one or more fluids within said passage (3), the sealing bar (6) comprising at least one longitudinal recess (12), the sealing bar (6) and the longitudinal recess (12) extending, in the direction of their length, parallel to the first direction (z), **characterized in that** at least one measuring member (14) is arranged in the longitudinal recess (12) and configured to measure at least one physical quantity, in particular at least one temperature, in said longitudinal recess (12).

2. Heat exchanger according to claim 1, **characterized in that** said at least one sealing bar (6) is arranged at the first edge (4) so as to at least partially separate an internal volume from the outside of the stack or that said at least one sealing bar (6) is arranged at a predetermined distance from the first edge (4) so as to at least partially separate an internal volume from another internal volume within the passage (3).

3. Heat exchanger according to one of claims 1 or 2, **characterized in that** said at least one measuring member (14) is of elongate shape and extends, in the direction of its length, parallel to the first direction (z) in the longitudinal recess (12), the measuring member preferably being configured to measure several values of said physical quantity along the first direction (z).

4. Heat exchanger according to one of the preceding claims, **characterized in that** said at least one measuring member (14) comprises at least one optical waveguide, in particular at least one optical fiber.

5. Heat exchanger according to one of the preceding claims, **characterized in that** the sealing bar (6) comprises a first bar portion (61) and a second bar portion (62) which are physically distinct, each extending parallel to the first direction (z) and spaced from one another in a second direction (x) orthogonal to the first direction (z) and parallel to the plates (2), such that so that the longitudinal recess (12) is formed by the space provided between the first bar portion (61) and the second bar portion (62) or **in that** the longitudinal recess (12) is formed by a groove provided in a monolithic sealing bar (6) comprising two lateral faces (63) facing each of the adjacent plates (2), the groove (12) opening onto one or other of the side faces (63) of the bar (6).

6. Heat exchanger according to one of the preceding claims, **characterized in that** it comprises at least two sealing bars (6) arranged in opposition between two adjacent plates (2), each bar extending, lengthwise, parallel to the first direction (z) and comprising at least one longitudinal recess (12) extending, lengthwise, parallel to the first direction (z) and provided with at least one measuring member (14).

7. Heat exchanger according to one of the preceding claims, **characterized in that** the sealing bar (6) comprises at least one longitudinal face (64) parallel to the first direction (z) and at least one transverse face (65) orthogonal to the first direction (z), the longitudinal recess (12) opens to the outside of the stack (1) through at least one opening (11) located on the transverse face (65) of the sealing bar (6), preferably the sealing bar (6) comprises two opposite transverse faces (65) and the longitudinal recess (12) opens to the outside of the stack (1) through two openings (11) located on each of the opposite transverse faces.

8. Heat exchanger according to one of the preceding claims, **characterized in that** it comprises at least one set of sealing bars (6) extending, in the direction of their length, parallel to the first direction (z) and arranged one above the other in a stacking direction (y) orthogonal to the plates (2), each sealing bar (6) of said assembly comprising at least one longitudinal recess (12) extending, lengthwise, parallel to the first direction (z) and provided with at least one measuring member (14).

9. Heat exchanger according to claim 8, **characterized in that** the sealing bars (6) of said assembly each comprise at least one longitudinal face (64) parallel to the first direction (z), at least one transverse face (65) orthogonal to the first direction (z) and at least one longitudinal recess (12) extending, in the longitudinal direction, parallel to the first direction (z) and provided with at least one measuring member (14), the longitudinal recesses (12) of each sealing bar (6) opening towards the outside of the stack (1) through respective openings (11) located at the transverse faces (65) of each bar, at least one measuring member (14) extending outside a longitudinal recess (12) through one of the openings (11) and then re-entering an adjacent longitudinal recess (12) through another of said openings (11).

10. Heat exchanger according to one of claims 8 or 9, **characterized in that** the measuring member (14) comprises at least two inner portions (14a) each arranged in a longitudinal recess (12) of a sealing bar (6) and integrally connected by a curvilinear outer portion (14b) arranged outside the stack (1), preferably the outer portion (14b) has a radius of curvature of at least 10 cm, preferably at least 20 cm.

11. Heat exchanger according to claim 10, **characterized in that** the plates (2) have two opposite second edges (5) arranged parallel to a second direction (x) orthogonal to the first direction (z), the measuring member (14) comprising a plurality of inner portions (14a) connected by outer portions (14b) located alternately on either side of the opposite second edges (5).

12. Heat exchanger according to one of claims 9 to 11, **characterized in that** the stack has a total height (H) measured in the stacking direction (y), the sealing bars (6) of said assembly being separated from one another by intermediate heights (h) measured in the stacking direction (y), the ratio between the intermediate heights (h) and the total height (H) being between 5 and 50%.

13. Heat exchanger according to one of the preceding claims, **characterized in that** said at least one longitudinal recess (12) and said at least one measuring member (14) have, along at least one direction orthogonal to the first direction (z) if the sealing bar (6) is arranged parallel to the first direction (z) or parallel to the first direction (z) if the sealing bar (6) is arranged orthogonal to said second direction (x), an inner dimension an outer dimension respectively, the ratio between the outer dimension of the measuring member (14) and the inner dimension of the longitudinal recess (12) being at most 95%, preferably between 70 and 90%.

14. Heat exchange installation comprising an exchanger according to one of the preceding claims and comprising at least one distribution pipe configured to distribute one or more fluids in one or more internal volumes of at least one passage (3), at least one fluid control device configured to authorize, modify and/or stop the distribution of at least one fluid through the distribution pipe, the measuring device (14) being configured to generate at least one leak signal in response to a variation in said physical quantity and the control device being configured to modify or stop the distribution of said fluid through the distribution pipe in response to said leak signal.

15. Cryogenic air separation unit comprising at least one exchanger according to one of claims 1 to 13 or an installation according to claim 14, in which unit said exchanger effects liquefaction or cooling of a flow of gaseous oxygen coming from the cryogenic air separation unit with liquid nitrogen or liquid argon which heats or vaporizes.

## Patentansprüche

1. Ein Plattenwärmetauscher in gelöteter Ausführung, umfassend einen Stapel (1) von Platten (2), die parallel zueinander angeordnet sind, um zwischen den Platten (2) eine Vielzahl von Kanälen (3) zu definieren, wobei die Platten (2) jeweils mindestens eine erste Kante (4) aufweisen, die sich parallel zu einer ersten Richtung (z) erstreckt, mindestens ein Kanal (3), der zwischen zwei aufeinanderfolgenden Platten (2) definiert ist, umfassend mindestens eine Dichtungsleiste (6), die so angeordnet ist, dass sie mindestens teilweise ein oder mehrere Innenvolumen für den Durchfluss eines oder mehrerer Fluide innerhalb des Kanals (3) begrenzt, wobei die Dichtungsleiste (6) mindestens eine Längsaussparung (12) aufweist, wobei sich die Dichtungsleiste (6) und die Längsaussparung (12) in Richtung ihrer Länge parallel zur ersten Richtung (z) erstrecken, **dadurch gekennzeichnet, dass** mindestens ein Messglied (14) in der Längsaussparung (12) angeordnet und so konfiguriert ist, dass es mindestens eine physikalische Größe, insbesondere mindestens eine Temperatur, in der Längsaussparung (12) misst.

2. Wärmetauscher nach Anspruch 1, **dadurch gekennzeichnet, dass** die mindestens eine Dichtungsleiste (6) an der ersten Kante (4) so angeordnet ist, dass sie ein Innenvolumen mindestens teilweise von der Außenseite des Stapels trennt, oder dass die mindestens eine Dichtungsleiste (6) in einem vorbestimmten Abstand von der ersten Kante (4) so angeordnet ist, dass sie ein Innenvolumen mindestens teilweise von einem anderen Innenvolumen innerhalb des Kanals (3) trennt.

3. Wärmetauscher nach einem der Ansprüche 1 oder 2, **dadurch gekennzeichnet, dass** das mindestens eine Messglied (14) von länglicher Form ist und sich in Richtung seiner Länge parallel zur ersten Richtung (z) in der Längsaussparung (12) erstreckt, wobei das Messglied vorzugsweise so konfiguriert ist, dass es mehrere Werte der physikalischen Größe entlang der ersten Richtung (z) misst.

4. Wärmetauscher nach einem der vorhergehenden Ansprüche, **dadurch gekennzeichnet, dass** das mindestens eine Messglied (14) mindestens einen Lichtwellenleiter, insbesondere mindestens eine optische Faser, umfasst.

5. Wärmetauscher nach einem der vorhergehenden Ansprüche, **dadurch gekennzeichnet, dass** die Dichtungsleiste (6) einen ersten Leistenabschnitt (61) und einen zweiten Leistenabschnitt (62) umfasst, die physikalisch getrennt sind, wobei sich jeder parallel zur ersten Richtung (z) erstreckt und voneinander in einer zweiten Richtung (x) orthogonal zur ersten Richtung (z) und parallel zu den Platten (2) beabstandet ist, so dass die Längsaussparung (12) durch den zwischen dem ersten Leistenabschnitt (61) und dem zweiten Leistenabschnitt (62) vorgesehenen Raum gebildet wird, oder dass die Längsaussparung (12) durch eine Nut in einer monolithischen Dichtungsleiste (6) gebildet wird, die zwei Seitenflächen (63) aufweist, die jeweils einer der benachbarten Platten (2) zugewandt sind, wobei die Nut (12) in die eine oder andere der Seitenflächen (63) der Leiste (6) mündet.

6. Wärmetauscher nach einem der vorhergehenden Ansprüche, **dadurch gekennzeichnet, dass** er mindestens zwei Dichtungsleisten (6) umfasst, die gegenüberliegend zwischen zwei benachbarten Platten (2) angeordnet sind, wobei sich jede Leiste der Länge nach parallel zur ersten Richtung (z) erstreckt und mindestens eine Längsaussparung (12) umfasst, die sich der Länge nach parallel zur ersten Richtung (z) erstreckt und mit mindestens einem Messglied (14) versehen ist.

7. Wärmetauscher nach einem der vorhergehenden Ansprüche, **dadurch gekennzeichnet, dass** die Dichtungsleiste (6) mindestens eine Längsfläche (64) parallel zur ersten Richtung (z) und mindestens eine Querfläche (65) orthogonal zur ersten Richtung (z) aufweist, wobei die Längsaussparung (12) durch mindestens eine Öffnung (11), die sich an der Querfläche (65) der Dichtungsleiste (6) befindet, zur Außenseite des Stapels (1) hin öffnet, vorzugsweise umfasst die Dichtungsleiste (6) zwei gegenüberliegende Querflächen (65) und die Längsaussparung (12) öffnet sich durch zwei Öffnungen (11), die sich an jeder der gegenüberliegenden Querflächen befinden, zur Außenseite des Stapels (1).

8. Wärmetauscher nach einem der vorhergehenden Ansprüche, **dadurch gekennzeichnet, dass** er mindestens einen Satz von Dichtungsleisten (6) umfasst, die sich in Richtung ihrer Länge parallel zur ersten Richtung (z) erstrecken und übereinander in einer Stapelrichtung (y) orthogonal zu den Platten (2) angeordnet sind, wobei jede Dichtungsleiste (6) der Anordnung mindestens eine Längsaussparung (12) umfasst, die sich der Länge nach parallel zur ersten Richtung (z) erstreckt und mit mindestens einem Messglied (14) versehen ist.

9. Wärmetauscher nach Anspruch 8, **dadurch gekennzeichnet, dass** die Dichtungsleisten (6) der Anordnung jeweils mindestens eine Längsfläche (64) parallel zur ersten Richtung (z), mindestens eine Querfläche (65) orthogonal zur ersten Richtung (z) und mindestens eine Längsaussparung (12) umfassen, die sich in Längsrichtung parallel zur ersten Richtung (z) erstreckt und mit mindestens einem Messglied (14) versehen ist, wobei die Längsaussparungen (12) jeder Dichtungsleiste (6) sich durch jeweilige Öffnungen (11), die an den Querflächen (65) jeder Leiste angeordnet sind, zur Außenseite des Stapels (1) hin öffnen, wobei sich mindestens ein Messglied (14) durch eine der Öffnungen (11) außerhalb einer Längsaussparung (12) erstreckt und dann durch eine andere der Öffnungen (11) wieder in eine benachbarte Längsaussparung (12) eintritt.

10. Wärmetauscher nach einem der Ansprüche 8 oder 9, **dadurch gekennzeichnet, dass** das Messglied (14) mindestens zwei innere Abschnitte (14a) umfasst, die jeweils in einer Längsaussparung (12) einer Dichtungsleiste (6) angeordnet und durch einen kurvenförmigen äußeren Abschnitt (14b), der außerhalb des Stapels (1) angeordnet ist, einstückig verbunden sind, wobei der äußere Abschnitt (14b) vorzugsweise einen Krümmungsradius von mindestens 10 cm, vorzugsweise mindestens 20 cm, aufweist.

11. Wärmetauscher nach Anspruch 10, **dadurch gekennzeichnet, dass** die Platten (2) zwei gegenüberliegende zweite Kanten (5) aufweisen, die parallel zu einer zweiten Richtung (x) orthogonal zur ersten Richtung (z) angeordnet sind, wobei das Messglied (14) eine Vielzahl von inneren Abschnitten (14a) umfasst, die durch äußere Abschnitte (14b) verbunden sind, die abwechselnd auf der einen oder anderen Seite der gegenüberliegenden zweiten Kanten (5) angeordnet sind.

12. Wärmetauscher nach einem der Ansprüche 9 bis 11, **dadurch gekennzeichnet, dass** der Stapel eine Gesamthöhe (H) hat, die in der Stapelrichtung (y) gemessen wird, wobei die Dichtungsleisten (6) der Anordnung durch Zwischenhöhen (h), die in der Stapelrichtung (y) gemessen werden, voneinander getrennt sind, wobei das Verhältnis zwischen den Zwischenhöhen (h) und der Gesamthöhe (H) zwischen 5 und 50% liegt.

13. Wärmetauscher nach einem der vorhergehenden Ansprüche, **dadurch gekennzeichnet, dass** die mindestens eine Längsaussparung (12) und das mindestens eine Messglied (14) entlang mindestens einer Richtung orthogonal zur ersten Richtung (z), wenn die Dichtungsleiste (6) parallel zur ersten Richtung (z) angeordnet ist, oder parallel zur ersten Richtung (z), wenn die Dichtungsleiste (6) orthogonal zur zweiten Richtung (x) angeordnet ist, eine Innenabmessung bzw. eine Außenabmessung aufweisen, wobei das Verhältnis zwischen der Außenabmessung des Messglieds (14) und der Innenabmessung der Längsaussparung (12) höchstens 95%, vorzugsweise zwischen 70 und 90%, beträgt.

14. Wärmeaustauschanlage, die einen Tauscher nach einem der vorhergehenden Ansprüche und mindestens eine Verteilerleitung umfasst, die so konfiguriert ist, dass sie ein oder mehrere Fluide in einem oder mehreren Innenvolumen von mindestens einem Kanal (3) verteilt, mindestens eine Fluidsteuervorrichtung, die so konfiguriert ist, dass sie die Verteilung von mindestens einem Fluid durch die Verteilerleitung genehmigt, ändert und/oder stoppt, wobei die Messvorrichtung (14) so konfiguriert ist, dass sie als Reaktion auf eine Änderung der physikalischen Größe mindestens ein Lecksignal erzeugt, und die Steuervorrichtung so konfiguriert ist, dass sie als Reaktion auf das Lecksignal die Verteilung des Fluids durch die Verteilerleitung ändert oder stoppt.

15. Kryogene Luftzerlegungsanlage, umfassend mindestens einen Tauscher nach einem der Ansprüche 1 bis 13 oder eine Anlage nach Anspruch 14, wobei in dieser Einheit der Tauscher eine Verflüssigung oder Kühlung eines Stroms von gasförmigem Sauerstoff bewirkt, der aus der kryogenen Luftzerlegungsanlage mit flüssigem Stickstoff oder flüssigem Argon kommt, das sich erwärmt oder verdampft.

## Revendications

1. Un échangeur de chaleur de type à plaques brasées comprenant un empilement (1) de plaques (2) agencées parallèlement les unes aux autres de manière à définir entre lesdites plaques (2) une pluralité de passages (3), les plaques (2) comprenant chacune au moins un premier bord (4) s'étendant parallèlement à une première direction (z), au moins un passage (3) défini entre deux plaques consécutives (2) comprenant au moins une barrette d'étanchéité (6) agencée pour délimiter au moins partiellement un ou plusieurs volumes internes pour l'écoulement d'un ou plusieurs fluides à l'intérieur dudit passage (3), la barrette d'étanchéité (6) comprenant au moins un évidement longitudinal (12), la barrette d'étanchéité (6) et l'évidement longitudinal (12) s'étendant, dans la direction de leur longueur, parallèlement à la première direction (z), **caractérisé en ce qu'**au moins un organe de mesure (14) est agencé dans l'évidement longitudinal (12) et configuré pour mesurer au moins une grandeur physique, en particulier au moins une température, dans ledit évidement longitudinal (12).

2. Échangeur de chaleur selon la revendication 1, **caractérisé en ce que** ladite au moins une barrette d'étanchéité (6) est agencée au niveau du premier bord (4) de manière à séparer au moins partiellement un volume interne de l'extérieur de l'empilement ou que ladite au moins une barrette d'étanchéité (6) est agencée à une distance prédéterminée du premier bord (4) de manière à séparer au moins partiellement un volume interne d'un autre volume interne à l'intérieur du passage (3).

3. Échangeur de chaleur selon l'une des revendications 1 ou 2, **caractérisé en ce que** ledit au moins un organe de mesure (14) est de forme allongée et s'étend, dans la direction de sa longueur, parallèlement à la première direction (z) dans l'évidement longitudinal (12), l'organe de mesure étant de préférence configuré pour mesurer plusieurs valeurs de ladite grandeur physique le long de la première direction (z).

4. Échangeur de chaleur selon l'une des revendications précédentes, **caractérisé en ce que** ledit au moins un organe de mesure (14) comprend au moins un guide d'onde optique, en particulier au moins une fibre optique.

5. Échangeur de chaleur selon l'une des revendications précédentes, **caractérisé en ce que** la barrette d'étanchéité (6) comprend une première partie de barrette (61) et une seconde partie de barrette (62) qui sont physiquement distinctes, chacune s'étendant parallèlement à la première direction (z) et espacées l'une de l'autre dans une seconde direction (x) orthogonale à la première direction (z) et parallèle aux plaques (2), de sorte que l'évidement longitudinal (12) est formé par l'espace prévu entre la première partie de barrette (61) et la seconde partie de barrette (62) ou **en ce que** l'évidement longitudinal (12) est formé par une rainure prévue dans une barrette d'étanchéité monolithique (6) comprenant deux faces latérales (63) faisant face à chacune des plaques adjacentes (2), la rainure (12) débouchant sur l'une ou l'autre des faces latérales (63) de la barrette (6).

6. Échangeur de chaleur selon l'une des revendications précédentes, **caractérisé en ce qu'**il comprend au moins deux barrettes d'étanchéité (6) agencées en opposition entre deux plaques adjacentes (2), chaque barrette s'étendant, longitudinalement, parallèlement à la première direction (z) et comprenant au moins un évidement longitudinal (12) s'étendant, longitudinalement, parallèlement à la première direction (z) et pourvu d'au moins un organe de mesure (14).

7. Échangeur de chaleur selon l'une des revendications précédentes, **caractérisé en ce que** la barrette d'étanchéité (6) comprend au moins une face longitudinale (64) parallèle à la première direction (z) et au moins une face transversale (65) orthogonale à la première direction (z), l'évidement longitudinal (12) débouche à l'extérieur de l'empilement (1) par au moins une ouverture (11) située sur la face transversale (65) de la barrette d'étanchéité (6), de préférence la barrette d'étanchéité (6) comprend deux faces transversales opposées (65) et l'évidement longitudinal (12) débouche à l'extérieur de l'empilement (1) par deux ouvertures (11) situées sur chacune des faces transversales opposées.

8. Échangeur de chaleur selon l'une des revendications précédentes, **caractérisé en ce qu'**il comprend au moins un ensemble de barrettes d'étanchéité (6) s'étendant, dans la direction de leur longueur, parallèlement à la première direction (z) et agencées l'une au-dessus de l'autre dans une direction d'empilement (y) orthogonale aux plaques (2), chaque barrette d'étanchéité (6) dudit ensemble comprenant au moins un évidement longitudinal (12) s'étendant, longitudinalement, parallèlement à la première direction (z) et pourvu d'au moins un organe de mesure (14).

9. Échangeur de chaleur selon la revendication 8, **caractérisé en ce que** les barrettes d'étanchéité (6) dudit ensemble comprennent chacune au moins une face longitudinale (64) parallèle à la première direction (z), au moins une face transversale (65) orthogonale à la première direction (z) et au moins un évidement longitudinal (12) s'étendant, dans la direction longitudinale, parallèlement à la première direction (z) et pourvu d'au moins un organe de mesure (14), les évidements longitudinaux (12) de chaque barrette d'étanchéité (6) débouchant vers l'extérieur de l'empilement (1) par des ouvertures respectives (11) situées sur les faces transversales (65) de chaque barrette, au moins un organe de mesure (14) s'étendant à l'extérieur d'un évidement longitudinal (12) par l'une des ouvertures (11) puis rentrant dans un évidement longitudinal adjacent (12) par une autre desdites ouvertures (11).

10. Échangeur de chaleur selon l'une des revendications 8 ou 9, **caractérisé en ce que** l'organe de mesure (14) comprend au moins deux parties intérieures (14a) agencées chacune dans un évidement longitudinal (12) d'une barrette d'étanchéité (6) et reliées intégralement par une partie extérieure curviligne (14b) agencée à l'extérieur de l'empilement (1), de préférence la partie extérieure (14b) a un rayon de courbure d'au moins 10 cm, de préférence d'au moins 20 cm.

11. Échangeur de chaleur selon la revendication 10, **caractérisé en ce que** les plaques (2) ont deux seconds bords opposés (5) agencés parallèlement à une seconde direction (x) orthogonale à la première direction (z), l'organe de mesure (14) comprenant une pluralité de parties intérieures (14a) reliées par des parties extérieures (14b) situées alternativement d'un côté ou de l'autre des seconds bords opposés (5).

12. Échangeur de chaleur selon l'une des revendications 9 à 11, **caractérisé en ce que** l'empilement a une hauteur totale (H) mesurée dans la direction d'empilement (y), les barrettes d'étanchéité (6) dudit ensemble étant séparées les unes des autres par des hauteurs intermédiaires (h) mesurées dans la direction d'empilement (y), le rapport entre les hauteurs intermédiaires (h) et la hauteur totale (H) étant compris entre 5 et 50%.

13. Échangeur de chaleur selon l'une des revendications précédentes, **caractérisé en ce que** ledit au moins un évidement longitudinal (12) et ledit au moins un organe de mesure (14) ont, le long d'au moins une direction orthogonale à la première direction (z) si la barrette d'étanchéité (6) est agencée parallèlement à la première direction (z) ou parallèlement à la première direction (z) si la barrette d'étanchéité (6) est agencée orthogonalement à ladite seconde direction (x), une dimension intérieure et une dimension extérieure respectivement, le rapport entre la dimension extérieure de l'organe de mesure (14) et la dimension intérieure de l'évidement longitudinal (12) étant au plus de 95%, de préférence entre 70 et 90%.

14. Installation d'échange de chaleur comprenant un échangeur selon l'une des revendications précédentes et comprenant au moins un tuyau de distribution configuré pour distribuer un ou plusieurs fluides dans un ou plusieurs volumes internes d'au moins un passage (3), au moins un dispositif de commande de fluide configuré pour autoriser, modifier et/ou arrêter la distribution d'au moins un fluide à travers le tuyau de distribution, le dispositif de mesure (14) étant configuré pour générer au moins un signal de fuite en réponse à une variation de ladite grandeur physique et le dispositif de commande étant configuré pour modifier ou arrêter la distribution dudit fluide à travers le tuyau de distribution en réponse audit signal de fuite.

15. Unité de séparation d'air cryogénique comprenant au moins un échangeur selon l'une des revendications 1 à 13 ou une installation selon la revendication 14, dans laquelle unité ledit échangeur effectue la liquéfaction ou le refroidissement d'un flux d'oxygène gazeux provenant de l'unité de séparation d'air cryogénique avec de l'azote liquide ou de l'argon liquide qui se réchauffe ou se vaporise.
